# EUROPEAN PATENT SPECIFICATION

(11) **EP 0 442 611 B1**
(45) Date of publication and mention of the grant of the patent: **13.03.1996**
(21) Application number: 91300350.5
(22) Date of filing: 17.01.1991
(51) Int. Cl.: H04L 27/34

(54) **RF signal synthesis**
Synthese von RF-Signalen
Synthèse de signaux RF

(30) Priority: 16.02.1990 GB 9003582
(43) Date of publication of application: 21.08.1991
(73) Proprietor: NORTHERN TELECOM LIMITED, Montreal, Quebec H2Y 3Y4 (CA)
(72) Inventor: Read, Arnold George, Newton Abbot, Devon TQ12 5PP (GB)
(74) Representative: Dennis, Mark Charles

(56) References cited:
- EP-A- 0 139 033
- US-A- 4 308 617
- US-A- 4 543 066
- US-A- 4 812 786
- US-A- 4 888 788

## Description

This invention relates to apparatus and method for gener-ating complex composite RF signals, such as spread spectrum signals.

Spread spectrum signals are used in satellite navigation systems such as Global Positioning System (GPS) or Glonass. For development and evaluation purposes it is desirable to simulate locally such signals in laboratory equipment

EP-A-139033 (A N T Nachrichtentechnik) provides a digital direct modulator which results in clock-edged transitions. Synchronous 1 Mega-bit signals are employed. Thus in the I/Q domain, the signal consists of a sequence of signals chosen from an NxN constellation. US-A-4308617 (Bendix) provides a noiselike amplitude and phase modulation coding for split spectrum transmissions. PN generators produce a binary sequence for each modular two added to the datastream, which results, for each pair, in only four points being used in a QPSK modulator.

As is known there is provided apparatus for generating complex composite RF signals, the apparatus comprising:
an unmodulated RF carrier signal source;
a splitter coupled to the RF carrier signal source for splitting the output of said source into I & Q quadrature components;
a modulator coupled to receive in-phase components from the splitter and a baseband control signal generator operable to generate control signals representing the in-phase components of the complex composite signal; and
a modulator coupled to receive quadrature components from the splitter and a baseband control signal generator operable to generate control signals representing the quadrature components of the complex composite signal.

In accordance with the present invention the baseband control signals are analogue signals generated from a plurality of signal generators and are summed in respective summers.

In a preferred embodiment the modulating means each comprise a biphase linear attenuator.

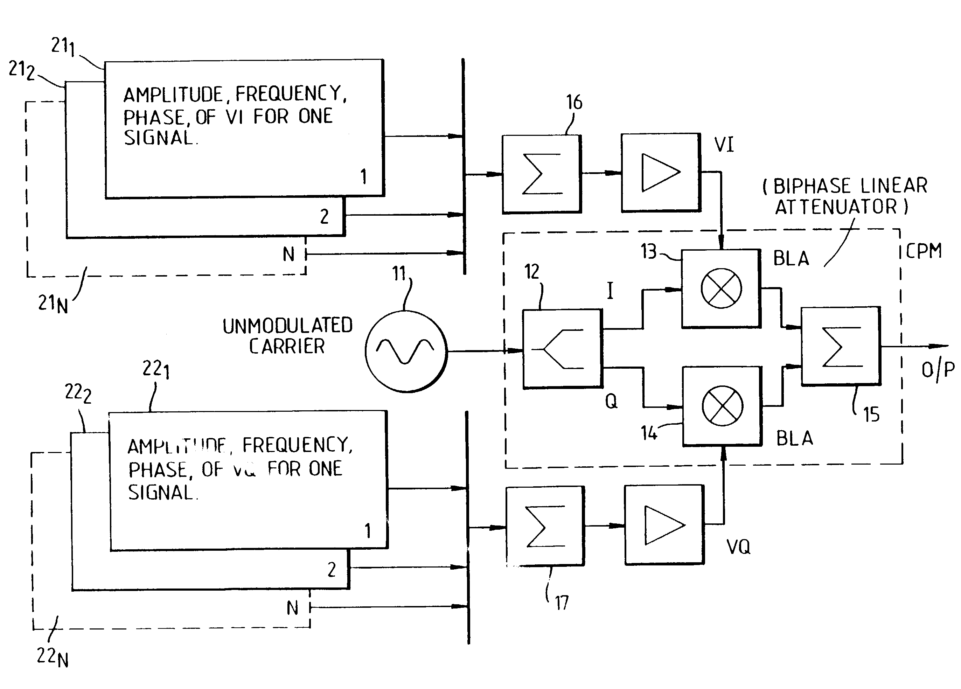

An embodiment of the invention will now be described with reference to the accompanying drawing which is a block schematic diagram of an apparatus for generating complex composite RF signals.

In the arrangement illustrated an oscillator 11 or other form of generator provides an unmodulated carrier signal which is fed, via splitter 12, to two modulators 13, 14. The equal carrier signal inputs to the modulators form the basis for subsequent I & Q quadrature components of a complex composite RF signal output. The outputs of modulators 13 and 14 are then summed in network 15 to provide the RF output. The modulation control signals applied to modulators 13, 14 are derived from, for example, pluralities of computerised signal generators 21₁, 21₂... 21_{N} and 22₁, 22₂... 22_{N}. These are arranged to generate control signals representing sets of amplitude, frequency and phase parameters for the respective I & Q components of the complex composite RF signal. Such parameters can be used for generating, for example, spread spectrum signals as are used in global positioning systems (GPS) to simulate signals received from a number of satellites. The sets of control signals from each plurality of signal generators are summed in respective summing networks 16, 17 and, after any necessary amplifications, applied to the respective modulators 13, 14. Preferably the modulators 13, 14 are biphase linear attenuators such as are manufactured by Olektron Corporation.

## Claims

1. Apparatus for generating complex composite RF signals, the apparatus comprising:
an unmodulated RF carrier signal source (11);
a splitter (12) coupled to the RF carrier signal source (11) for splitting the output of said source into I & Q quadrature components;
a modulator (13) coupled to receive in-phase components from the splitter and a baseband control signal generator operable to generate control signals representing the in-phase components of the complex composite signal; and
a modulator (14) coupled to receive quadrature components from the splitter and a baseband control signal generator operable to generate control signals representing the quadrature components of the complex composite signal;
characterised in that the baseband control signals are analogue signals, the apparatus containing a plurality of signal generators (21_{1-N}; 22_{1-N}) and respective summers (16, 17) for summing the outputs of said signal generators, to generate said control signals.

2. An apparatus according to claim 1 further including amplification means provided between respective summers and modulators from the baseband control signal generators

3. A method of generating complex composite RF signals comprising the steps of generating an unmodulated RF carrier signal splitting the unmodulated RF carrier signal into I & Q components, modulating each component separately with respective baseband control signals representing parameters of I & Q components of the complex composite RF signal and summing the modulated components to form the complex composite RF signal;
characterised in that the baseband control signals are analogue signals generated from a plurality of signal generators (21_{1-N}); 22_{1-N}) and are summed in respective summers (16, 17).

## Patentansprüche

1. Vorrichtung zur Erzeugung komplexer zusammengesetzter Hochfrequenzsignale, wobei die Vorrichtung folgende Teile umfaßt:
eine unmodulierte Hochfrequenz-Trägersignalquelle (11),
einen Signalteiler (12), der mit der Hochfrequenz-Trägersignalquelle (11) gekoppelt ist, um das Ausgangssignal der Quelle in I & Q-Quadraturkomponenten aufzuspalten,
einen Modulator (13), der zum Empfang der gleichphasigen Komponente von dem Signalteiler und von einem Basisband-Steuersignalgenerator angeschaltet ist, der zur Erzeugung von Steuersignalen betreibbar ist, die die gleichphasigen Komponenten des komplexen zusammengesetzten Signals darstellen, und
einen Modulator (14), der zum Empfang von Quadraturkomponenten von dem Signalteiler und einem Basisband-Steuersignalgenerator angeschaltet ist, der zur Erzeugung von Steuersignalen betreibbar ist, die die Quadraturkomponenten des komplexen zusammengesetzten Signals darstellen,
dadurch gekennzeichnet, daß die Basisband-Steuersignale Analogsignale sind, und daß die Vorrichtung eine Vielzahl von Signalgeneratoren (21₁-_{N}; 22₁-_{N}) und jeweilige Summierer (16, 17) zur Summierung der Ausgänge der Signalgeneratoren zur Erzeugung der Steuersignale umfaßt.

2. Vorrichtung nach Anspruch 1, die weiterhin Verstärkungseinrichtungen einschließt, die zwischen den jeweiligen Summierern und Modulatoren von den Basisband-Steuersignalgeneratoren vorgesehen sind.

3. Verfahren zur Erzeugung komplexer zusammengesetzter Hochfrequenzsignale, mit den Schritten der Erzeugung eines unmodulierten Hochfrequenz-Trägersignals, der Aufteilung des unmodulierten Hochgrequenz-Trägersignals in I & Q-Komponenten, der Modulation jeder Komponente getrennt mit jeweiligen Basisband-Steuersignalen, die Parameter von I & Q-Komponenten des komplexen zusammengesetzten Signals darstellen, und der Summierung der modulierten Komponenten zur Bildung des komplexen zusammengesetzten Hochfrequenzsignals,
dadurch gekennzeichnet, daß die Basisband-Steuersignale Analogsignale sind, die von einer Vielzahl von Signalgeneratoren (21₁-_{N}; 22₁-_{N}) erzeugt und in jeweiligen Summierern (16, 17) summiert werden.

## Revendications

1. Appareil générateur de signaux composites complexes à hautes fréquences, l'appareil comprenant :
une source (11) d'un signal non modulé de porteuse à hautes fréquences,
un répartiteur (12) couplé au signal (11) de la source de porteuse à hautes fréquences et destiné à répartir le signal de sortie de la source en composantes en quadrature I et Q,
un modulateur (13) couplé afin qu'il reçoive des composantes en phase du répartiteur et un générateur de signaux de commande en bande de base destiné à créer des signaux de commande représentant les composantes en phase du signal composite complexe, et
un modulateur (14) couplé afin qu'il reçoive les composantes en quadrature du répartiteur et un générateur de signaux de commande en bande de base destiné à créer des signaux de commande représentant les composantes en quadrature du signal composite complexe,
caractérisé en ce que les signaux de commande en bande de base sont des signaux analogiques, l'appareil contenant plusieurs générateurs de signaux (21_{1-N} ; 22_{1-N}) et des additionneurs respectifs (16, 17) destinés à additionner les signaux de sortie des générateurs de signaux pour la création des signaux de commande.

2. Appareil selon la revendication 1, comprenant en outre un dispositif d'amplification placé entre des additionneurs et modulateurs respectifs alimentés par les générateurs de signaux de commande en bande de base.

3. Procédé de création de signaux composites complexes à hautes fréquences, comprenant les étapes suivantes : la création d'un signal non modulé de porteuse à hautes fréquences, la répartition du signal non modulé de porteuse à hautes fréquences en composantes I et Q, la modulation de chaque composante séparément par des signaux respectifs de commande en bande de base représentant des paramètres des composantes I et Q du signal composite complexe à hautes fréquences, et l'addition des composantes modulées pour la formation du signal composite complexe à hautes fréquences, caractérisé en ce que les signaux de commande en bande de base sont des signaux analogiques créés par plusieurs générateurs de signaux (21_{1-N} ; 22_{1-N}) et sont ajoutés dans des additionneurs respectifs (16, 17).
